# EUROPEAN PATENT SPECIFICATION

(11) **EP 3 275 074 B1**
(45) Date of publication and mention of the grant of the patent: **13.02.2019**
(21) Application number: 16721934.4
(22) Date of filing: 23.03.2016
(51) Int. Cl.: H02N 2/18

(54) **CELL FOR CONVERTING FLUID-DYNAMIC FORCES INTO ELECTRICAL ENERGY, PARTICULARLY FOR THE PRODUCTION OF WIND POWER GENERATORS WITH LIMITED WEIGHT AND OVERALL DIMENSIONS**
ZELLE ZUR UMWANDLUNG VON FLUIDDYNAMISCHEN KRÄFTEN IN ELEKTRISCHE ENERGIE, INSBESONDERE ZUR HERSTELLUNG VON WINDKRAFTGENERATOREN MIT BEGRENZTEM GEWICHT UND GESAMTABMESSUNGEN
CELLULE POUR CONVERTIR DES FORCES DE DYNAMIQUE DES FLUIDES EN ÉNERGIE ÉLECTRIQUE, EN PARTICULIER POUR LA PRODUCTION DE GÉNÉRATRICES D'ÉNERGIE ÉOLIENNE PRÉSENTANT UN POIDS ET UN ENCOMBREMENT LIMITÉS

(30) Priority: 27.03.2015 IT BO20150152
(43) Date of publication of application: 31.01.2018
(73) Proprietor: Explea S.r.l., 42121 Reggio Emilia (IT)
(72) Inventor: SACCARDI, Pierluigi, 42030 Vezzano sul Crostolo Province of Reggio Emilia (IT); CAPPELLI, Fabio Renato, 40068 San Lazzaro di Savena Province of Bologna (IT)
(74) Representative: Porsia, Attilio
(86) International application number: PCT/IB2016/051630
(87) International publication number: WO 2016/157033

(56) References cited:
- GB-A- 2 517 018
- US-A- 3 665 226
- US-A- 3 666 976
- US-A1- 2002 043 895

## Description

The invention concerns a modular cell for converting fluid-dynamic forces into electrical energy and consists of a device formed of a battery of said cells, particularly for the production of wind power generators which, unlike those of known type, have very limited overall dimensions and weight, since they do not have blades or other cumbersome parts which are exposed to the action of the wind and in rotation, thus also being negatively affected by the friction of the support bearings and by inertial mass. Patent document US2002/0043895 discloses micro-transducers incorporating piezoelectric materials for converting energy from fluid flow in a channel using a valve.

The cell according to the invention consists essentially of two fundamental and distinct parts. A first part converts the vector of the fluid-dynamic force, also of constant type, into discontinuous vectors, while the second part transforms these discontinuous vectors into electrical energy. The cell thus composed has dimensions and shapes such as to be assembled in parallel or in series, or in series-parallel, with other cells of the same type, without any physical, fluid-dynamic or electrical limitation. The first of said two parts, the one facing the incoming fluid which transforms the thrust force of said fluid, also but not necessarily constant, into discontinuous forces, with sense, direction and intensity modified to interact with greater efficiency with said second part, is essentially of chemical type and fundamentally uses one or more non-Newtonian polymers operating alone or in synergy, while said second part which transforms said discontinuous forces into electrical energy is essentially physical and uses a piezoelectric matrix, with appropriate thickness, doping and shape. The cell can therefore be ideally conceived as a wafer formed by the overlapping of said two fundamental chemical and physical parts, without excluding any interpenetration of the first polymer component(s) on the surface of the second physical piezoelectric part.

The cell composed as above can be assembled with a complex of other cells of the same type to form a device or system able to respond to the fundamental requirements of practicality of storage, handling, installation, electrical compliance and visual and environmental impact. Each individual system, constituted as described, can be employed for static uses or can be mounted on moving parts, for example on trains, ships or cars, and can in turn be part of a larger system, to form network systems that can be expanded and connected with other sources of electrical energy or with any utility.

Said first part of the cell according to the invention is formed of a valve which is substantially a sleeve valve, made of pseudoplastic non-Newtonian polymers, with a sphincter type inner longitudinal channel, normally closed, with the proximal end exposed to the action of the fluid-dynamic vector, while the distal end cooperates with and pushes on the piezoelectric generator which begins to electrically charge itself. When the shear strain acting on the inner channel of the pseudoplastic valve exceeds the permitted design load, said inner channel of the pseudoplastic valve modifies its inner shape and opens so that the action of the fluid-dynamic vector is manifested directly and with intensity in the area of contact between the distal end of the valve and the piezoelectric generator which is further charged, until also the distal end of the pseudoplastic valve, under the effects of the pressure, modifies its geometry and opens, allowing the fluid-dynamic vector to flow into discharge channels that determine a sudden pressure drop upstream, both on the piezoelectric generator, which releases the electric charges produced in the previous compression phase, and on the axial channel of the pseudoplastic valve; the latter, due to lack of the thrust which previously determined the opening thereof and also due to the considerable pressure difference between the part upstream and the part downstream, re-acquires its initial shape and closes to start a new pulsed transformation cycle of the type described.

Preferably, on the active surface of the piezoelectric generator, i.e. the surface that cooperates with the distal end of the pseudoplastic valve, a layer of expanding type non-Newtonian polymer is arranged, which acts as a mechanical amplifier: from the initially solid state, under the effect of the pressure it passes to a state of greater solidity, whereas when the pressure drops, it returns to the initial state and acts as a shock absorber.

Further details of the invention and the resulting advantages will become clearer from the following description of a preferred embodiment thereof, illustrated purely by way of non-limiting example, in the figures of the only drawing attached, in which:
- Fig. 1 illustrates a cell according to the invention, in longitudinal section in the direction of the path of the fluid-dynamic vector along said cell;
- Fig. 2 illustrates a block diagram of a system formed of several cells as in figure 1 and of successive means that render usable the electrical energy produced by said system.

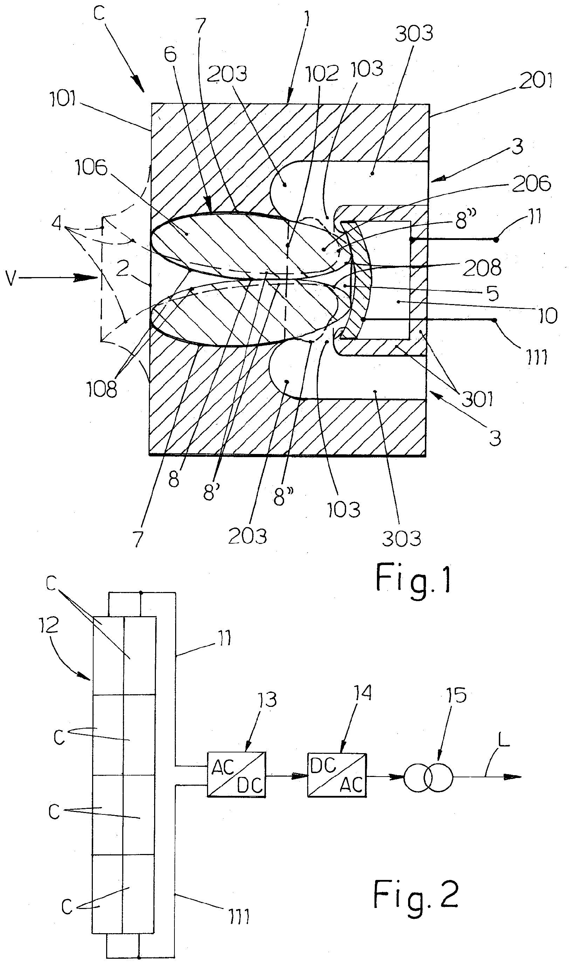

In figure 1, the number 1 indicates the support body of the cell C, made of any plastic material which is supporting, solid and non-deformable, for example methacrylate, PET, PVC and/or other suitable materials, also with the addition of reinforcement fibres, which by machining or moulding is provided with cavities adapted to house the components described below. The body 1, which will have suitable dimensions, has opposite faces: the face 101 is oriented towards the fluid-dynamic vector V to be transformed, for example towards the wind, and has a mouth or opening 2 for example with a substantially rectangular section or other suitable shape, for example an elliptical or round shape, for inlet of the wind; on the rear face 201 of the body 1, channels 3 open for discharging the wind, which will be described further on. In front of the opening 2 a funnel-shaped structural part 4 can be provided, diverging towards the outside, having the purpose of increasing the surface of the opening 2 facing the wind, to collect a greater quantity of wind flow and to progressively increase the speed of the wind towards the opening 2. The part 4 can be in one piece with the body 1 or can be inserted.

The opening 2 abuts onto a channel 7 which crosses the body 1 and opens into an internal cavity 5 of said body with an opening 102. This channel 7 houses longitudinally a valve 6, substantially a sleeve valve, with toroidal cross section, the initial or proximal portion of which 106 is externally seal-fastened, for example with adhesive, to the inner walls of said channel 7 which in this way supports from the outside said valve 6, the distal portion 206 of which engages the cavity 5. The inner walls of the valve 6 form in turn a sphincter channel which starts from the opening 2 and reaches the cavity 5; in an intermediate portion 8 said walls touch each other to make the valve 6 normally closed, while with the end portions, said walls of the inner normally closed channel of the valve 6 open with shapes diverging both towards the inlet opening 2 of the vector V, as indicated by 108, and towards the inner cavity 5, as indicated by 208. The contact area 8, seen frontally from the vector V, can be a transverse line or substantially a point, or can be flat or substantially round.

The valve 6 is made of non-Newtonian polymers, preferably pseudoplastic, which can be self-supporting or be contained in a supporting sheath made of flexible material, which wraps all around the valve 6 and which defines both the outer walls and the inner walls of the sphincter channel. The body of the valve 6 is therefore dense enough to be self-supporting and to have mechanical and geometrical characteristics suitable to perform the required function and to orient the cell C in any position required in the installation and operating phase.

The non-Newtonian materials that form the valve 6 can be composed of the dispersion in an aqueous matrix of one or more elastomers and other additive substances, for example carboxymethylcellulose, sodium alginate, magnesium silicate. If dissolved in water, the proportions of said components can vary from 3% to 50% by weight, or also higher fractions to give the system greater fluidity. Fluorinated components and small quantities of organic solvents can also be used for improved stabilisation of the non-Newtonian material at the specific ambient operating conditions. To increase the effects of glass transition towards fluidity, it will be possible to add to the aforementioned materials substances that facilitate said transition and also ensure greater flowability of their pure molecules at the low operating temperatures of the valve 6.

The valve 6 produced in the manner described therefore has the characteristic of being normally closed, but is such that when the closing area 8 is stressed by the thrust of the vector V of the wind, said area modifies its density, passing from the "solid" state to the "liquid" state and allowing the flow of the wind V to pass, increasing the speed thereof since the wind crosses a relatively narrow section channel which tends to progressively widen from upstream to downstream, i.e. from left to right when looking at figure 1.

The distal portion 206 of the valve 6, which protrudes into the cavity 5, with its rounded ends, touches the preferably concave surface of an insert 9 which further closes said valve 6 and which is made of a second polymer with non-Newtonian characteristics which, unlike the one mentioned previously for the valve 6, is of the expanding type, i.e. has characteristics such that when it is stressed by the thrust of the wind and said thrust exceeds predefined values, it passes from a solid state to an even more solid state. The insert 9 can be made for example of the following polymers: SBr (styrene-butadiene), EVA (ethylene-vinylacetate copolymer), polyurethane elastomers, CR (polychloroprene) and others. Additives which reduce the effects of the glass transition can also be added to these materials, to allow lower flowability of the molecules of the expanding material also at the low operating temperatures of the cell C.

The insert 9 is fastened, with a substantial coating function, on the preferably concave face of a piezoelectric generator 10, supported by a part 301 of the body 1 of the cell C, so that said piezoelectric generator 10 is positioned axially and perpendicularly with respect to the direction of the vector V. In morphological terms, the piezoelectric generator 10 has a body with thickness that can vary from a few tenths of a millimetre to around one centimetre and can be composed of substances such as lead, titanium, scandium, niobium, zirconium and other agglomerates, initially calcined, formatted, baked, metallized and lastly polarized to acquire piezoelectric capacity. The current state of the art allows agglomerates differing from one another to be produced with formulations that vary according to the intended application of the piezoelectric generator 10. In the case in point, reference can be made to usual formulations with a high content of lead, zirconium and titanium, which offer higher performance in terms of production of electrical charges when operating at low frequency and above all which ensure high performance also in the presence of low intensity mechanical stress.

The numbers 11 and 111 indicate the electrical connections to the armatures of the piezoelectric generator 10, below called electrodes.

On the outside of the distal portion 206 of the valve 6, which engages the cavity 5 and which cooperates with the non-Newtonian coating insert 9 of the piezoelectric generator 10, in the body 1 said discharge channels 3 are obtained which open onto the rear face 201 of said body 1 and which, starting from said insert 9, have first portions 103 with progressively increasing section which externally skim the distal portion 206 of the valve 6 and are oriented in a substantially contrary direction to that of the incoming flow V, and successive hairpin-shaped intermediate portions 203 with section initially increasing and then constant and which abut against final channel portions 303 with constant section, open onto the rear face 201 of the body 1 and which externally skim the part 301 of the body that supports the piezoelectric generator 10, also in order to cool this component.

The cell as described operates as follows.

The fluid-dynamic vector V, shown for example by the flow of the wind, enters the proximal end 106 of the pseudoplastic valve 6, which is closed and which with its distal end 206 pushes on the piezoelectric generator 10 via the expanding insert 9, thus triggering a first compression phase on said piezoelectric generator 10 which begins to electrically charge itself. As soon as the shear strain acting on the proximal portion of the pseudoplastic valve 6 exceeds the permitted design load, said pseudoplastic valve 6 becomes more fluid, modifies its inner shape and passes from the initial closing position 8 to the opening position indicated in figure 1 by 8' and by a broken line, so that the action of the vector V is manifested directly and with greater intensity on the insert 9 which closes the distal end of the valve 6 and which, under the effects of the pressure, further modifies its state and results in further charging of the generator 10. When the action of the vector V involves the distal end 206 of the valve 6, also the latter is stressed by the pressure and modifies its state, moves away from the insert 9, as indicated in figure 1 by the broken line and by 8", and opens the discharge channels 3. This leads to a sudden pressure drop in the part upstream involving the axial channel of the valve 6 which reacquires its initial shape since the pseudoplastic polymer composing it, in the absence of mechanical pressure, reacquires its initial density and shape, necessary to increase the pressure again on the inlet of said valve 6 and to start a new transformation cycle of the type described. Consequently also the expanding material which composes the insert 9 realigns to its initial shape due to annulment of the load force that acted on it; there will also be a drop in the pressure on the armatures of the piezoelectric generator 10 which via the circuit 11, 111 will release to the network the electric charges acquired during the compression phase previously considered.

The valve 6 can therefore be conceived as an appropriately elongated sleeve, with annular section, which with its inner part forms a wide channel, narrow and initially closed in the intermediate or bottom part 8, which with the distal end 206 is physically in contact with the insert 9 and closes the discharge orifices 3. In the geometric construction of the valve 6, the surface of the leading edge 106 of the fluid V is larger and more marked than the surface 206 of the outlet in order to facilitate, inside the channel 108, 208 and 3 crossed by the fluid being discharged, the presence of pressure change areas which trigger Venturi effects to facilitate rapid closing of the valve 6 after the first pressurisation phase. Due to the violent drop in pressure resulting from opening of the discharges 3 and the Venturi effect created in the open axial channel of the valve 6, the distal end 206 of said valve is subject, by the air that laps it externally as it flows through the first part 103 of the discharge orifices 3, to a pressure higher than the one in the open area 8' of the valve 6, so that also due to these conditions, the axial channel of said valve 6 rapidly returns to the initial condition 8 in which it closes and bars the fluid-dynamic vector V. There is therefore a close synergy between the "chemical" component (the valve 6) and the "mechanical" component (the piezoelectric generator 10) to obtain a pulsed thrust on said piezoelectric generator 10, also in the presence of low fluid-dynamic energy.

The coating insert 9 made of expanding material acts as a dynamic amplifier and shock absorber and for this purpose, the perimeter edge of said insert 9 is preferably made to interact with the fixed body 301, to use the latter as a supporting point or fulcrum when the insert 9 modifies its state due to the pressure. The concave surface of the insert 9 and of the active surface of the generator 10 will allow a better distribution of the load of the incident flow, with an inverse Gaussian distribution of the dynamic load, in which all the energy of the incident flow will be returned to the system, optimising it.

If desired, in order to limit the wear in the contact area between the distal end 206 of the valve 6 and the insert 9, between these two materials it will be possible to arrange a thin film of polyacetate or similar product, not illustrated in the drawings.

To obtain the best and most effective profile of the concave front of the piezoelectric generator 10 or to improve the efficiency of this component, said generator 10 can be mounted on its own support 301 with interposed expanding material similar to that of the insert 9 mentioned before, so that in the presence of the thrust triggered by the vector V, the generator 10 is substantially clamped in a "vice" which is closed by said vector and by the non-Newtonian deformation of said two expanding materials, the first, the one 9 situated between the generator 10 and the valve 6 which interacts with the body 301, and the other, not illustrated, situated between said generator 10 and the relative supporting body 301, which interacts with said body 301 and which is opposed to the material 9.

Considering that in the area of the discharge 3 of a cell C it will be possible to arrange the inlet valve 6 of a subsequent cell C and that therefore several cells C can be fluidly connected in series or in parallel or in series and parallel, with a plurality of said cells, it will be possible to compose a device 12 as in figure 2, formed of a battery of cells C in which the electrodes 11, 111 of the generators 10 can be connected to a first AC/DC conversion unit 13 which transforms into direct current the pulsed current with irregular random frequency produced by the generators 10, then to a subsequent DC/AC conversion unit 14 which will generate alternating electrical current with a regular frequency, with predefined value which can be used directly or can be fed into a distribution line L via a voltage transformer 15.

It is understood that the description refers to a preferred embodiment of the invention, to which numerous variations and construction modifications can be made, without abandoning the informing principle described, illustrated and claimed below. The transformation cell C described in this patent application and the devices produced with a plurality of said cells are understood to be protected for any use for which they may be intended, for conversion into electricity of any fluid-dynamic vector and as such of both gaseous and liquid nature, and for both static and dynamic installations.

In the claims, the references in brackets are purely indicative and do not limit the protective scope of said claims.

## Claims

1. Cell (C) for converting fluid-dynamic forces (V) into electrical energy, **characterised in that** it comprises:
- a support body (1) crossed by a channel (7) which opens with an inlet (2) onto the face (101) of said body (1) which is exposed to the incident action of the fluid-dynamic force (V) and which with the opposite inlet (102) opens into a cavity (5) inside said body (1), so that said force (V) crosses said channel (7) from its front inlet (2) towards said cavity (5);
- at least one piezoelectric generator (10) supported by an own body (301), positioned in said cavity (5) and oriented with its front armature perpendicularly and coaxially to said channel (7), so that said fluid-dynamic force (V) has an incident action on the centre of said front armature;
- a valve (6) positioned in said channel (7) to cyclically close it and open it, having a sleeve shape, with long annular portion such as to be fixed externally in said channel (7) with its proximal end (106) and reach with its distal end (206) said cavity (5) and in contact with said front armature of the piezoelectric generator (10); said valve (6) forms with its inner walls a sphincter channel which with its proximal portion is exposed to the action of the fluid-dynamic force (V) and which in an intermediate area (8) is initially closed; said valve (6) being made of non-Newtonian polymer materials, of pseudoplastic type, and such that at the beginning of each transformation cycle, the inner channel of said valve (6) is normally closed and the same valve (6) transmits to the piezoelectric generator (10) the thrust which it receives from the fluid-dynamic force (V) so that said generator (10) begins to charge itself; when the shear strain acting on the inner channel of the pseudoplastic valve (6) exceeds the permitted design load, said inner channel of the pseudoplastic valve (6) modifies its inner shape (8') and opens, so that the action of the fluid-dynamic force (V) is manifested directly and with greater intensity in the area of contact between the distal end (206) of the valve (6) and the piezoelectric generator (10); the latter is further charged until also the distal end (206) of the pseudoplastic valve (6), under the effect of the pressure, modifies its state and opens, leaving the fluid-dynamic force (V) free to flow through discharge channels;
- discharge channels (3) located on the outside of said cavity (5), which open onto the rear face (201) of the body (1) of the cell, normally closed by the distal end (206) of the pseudoplastic valve (6) and by the contact of the latter on the front armature of the piezoelectric generator (10) and arranged so that when they are opened by the change of state (8") of said distal end of the valve (6), they cause a sudden pressure drop upstream, both on the piezoelectric generator (10) which releases the electric charges produced in the previous compression phase, and in the axial channel of the pseudoplastic valve (6) which re-acquires its initial shape and closes to start a new conversion cycle of the type described.

2. Cell according to claim 1), wherein the pseudoplastic valve (6) can be formed entirely of non-Newtonian pseudoplastic materials or can comprise a casing which envelops it and defines it both on the outer lateral surface and on the inner surface, which is made of any material at least flexible and suitable for the purpose, also with Newtonian characteristics, and said deformable casing housing the pseudoplastic material(s), with non-Newtonian characteristics, that form the body of the valve (6).

3. Cell according to claim 1), wherein the front armature of the piezoelectric generator (10) has a concave shape to allow optimal distribution on said generator (10) of the load of the incident fluid-dynamic force (V), said armature being coated with an insert (9) made of a polymer which has non-Newtonian characteristics and is of expanding type, such that when it is pushed by the fluid-dynamic force (V) and the latter exceeds predefined values, it passes from a solid state to an even more solid state, thus acting firstly as a dynamic amplifier and then as a shock absorber.

4. Cell according to claim 3), wherein the piezoelectric generator (10) is mounted on its own support body (301) with an interposed layer of expanding material similar to that of the insert (9) which covers the front armature of said generator (10), so that in the presence of the thrust triggered by the fluid-dynamic force (V), the generator (10) is substantially clamped in a "vice" which is closed by the fluid-dynamic force (V) and by the non-Newtonian deformation of said two inserts made of expanding materials, i.e. between the first insert (9) located between the generator (10) and the pseudoplastic valve (6) and which preferably interacts with the body (301), and the other insert located between the same generator (10) and the relative support body (301) which also interacts with said body (301) and which is opposed to said first insert (9).

5. Cell according to claim 2), **characterised in that** to limit the wear in the contact area between the distal end (206) of the valve (6) and the expanding insert (9), a thin film of polyacetate or equivalent materials is arranged between these two components (6, 9).

6. Cell according to claim 1), wherein said pseudoplastic valve (6) is fixed by adhesives and/or other suitable means to the lateral and internal wall of the channel (7) which houses the proximal portion of said valve (6), the inner channel of which, in the form of a sphincter, has upstream and downstream of the intermediate closing area (8) tapered portions, one of which (108) diverges towards the outside, with the fluid-dynamic force (V) acting in it, and is wider than the other tapered portion (208) which diverges towards the piezoelectric generator (10).

7. Cell according to claim 1), **characterised in that** it comprises a funnel-shaped structure (4) diverging towards the outside, obtained in or inserted on the inlet (2) of the fluid-dynamic force (V) and which is intercepted by the pseudoplastic valve (6), in order to increase the surface of said inlet (2) facing the fluid-dynamic force (V), to collect a greater quantity of said force (V) and to progressively increase the speed of the fluid towards said inlet (2).

8. Cell according to claim 1), wherein said discharge channels (3) have first portions (103) with progressively widened section, then successive hairpin-shaped portions (203) and final portions (303) opening onto the rear face of the support body (1) of the cell, said discharge channels (3) being arranged to skim also laterally the support body (301) of the piezoelectric generator (10), so that this component is cooled by the fluid-dynamic flow (V) which cyclically circulates in said discharge channels (3).

9. Cell according to the preceding claims wherein the geometric shape of the axial inner channel (108, 8, 8', 208) of the pseudoplastic valve (6) and the shape of the discharge channels (3) are such as to facilitate, inside the channel (108, 8', 208, 103) crossed by the fluid-dynamic force being discharged (V), the creation of pressure change areas which trigger Venturi effects to facilitate rapid closing of said valve (6) after the first pressurisation phase; after the rapid pressure drop following opening of the discharge channels (3) and due to the Venturi effect which is created in the open axial channel (8') of the valve (6), the distal end (206) of said valve is subject, by the air that externally laps the deformed and open part (8") and which flows through the first part (103, 203) of the discharge channels (3), to a pressure higher than that in the open area (8') of the axial channel of the valve (6), so that also due to these conditions, the axial channel of said valve (6) returns rapidly to the initial condition (8) in which it closes and bars the fluid-dynamic force (V).

10. Cell according to the preceding claims, adapted to be mounted on fixed or moving supports, **characterised in that** it is arranged for assembly in battery with other similar cells with which it can be electrically and fluid-dynamically connected in parallel and in series and/or parallel to form a device (12), the electrodes (11, 111) of which can be connected to an AC/DC conversion unit (13), then to a subsequent DC/AC conversion unit (14) which will generate alternating electrical current at the pre-defined frequency, constant and appropriate for the use, or which can be fed into a distribution line (L) through a voltage transformer (15) and other suitable means.

## Patentansprüche

1. Eine Zelle (C) zur Umwandlung von fluiddynamischen Kräften (V) in elektrische Energie, **dadurch gekennzeichnet, dass** sie Folgendes umfasst:
- Einen Tragkörper (1), der von einem Kanal (7) durchquert wird, welcher sich jeweils mit einem entsprechenden Einlass (2) an der Vorderseite (101) des genannten Körpers (1) öffnet, der der inzidenten Wirkung der fluiddynamischen Kraft (V) ausgesetzt ist und der sich mit dem gegenüberliegenden Einlass (102) in einen Hohlraum (5) im Innern des genannten Körpers (1) öffnet, so dass die genannte Kraft (V) den genannten Kanal (7) von seinem vorderen Einlass (2) in Richtung des genannten Hohlraums (5) durchquert;
- Mindestens einen piezoelektrischen Generator (10), welcher durch einen eigenen Körper (301) gehalten wird, der in dem genannten Hohlraum (5) angeordnet und mit seinem vorderen Anker senkrecht und koaxial zu dem genannten Kanal (7) ausgerichtet ist, so dass die genannte fluiddynamische Kraft (V) eine inzidente Wirkung auf die Mitte des genannten vorderen Ankers ausübt;
- Ein Ventil (6), welches in dem genannten Kanal (7) angeordnet ist, um ihn zyklisch jeweils zu öffnen und zu schließen und das eine Hülsenform aufweist, mit einem langen, ringförmigen Abschnitt, so dass es außen in dem genannten Kanal (7) mit seinem proximalen Ende (106) jeweils befestigt werden und mit seinem distalen Ende (206) den genannten Hohlraum (5) erreichen kann, und in Kontakt mit dem genannten vorderen Anker des piezoelektrischen Generators; wobei das genannte Ventil (6) mit seinen Innenwänden einen Verengungskanal bildet, der mit seinem proximalen Abschnitt der Wirkung der fluiddynamischen Kraft (V) ausgesetzt ist und der in einem Zwischenbereich (8) anfangs geschlossen ist; wobei das genannte Ventil (6) aus nicht-newtonschen Polymer-Materialien pseudoplastischen Typs besteht, und zwar so, dass zu Beginn jedes Umwandlungszyklus der innere Kanal des genannten Ventils (6) normalerweise geschlossen ist und dasselbe Ventil (6) auf den piezoelektrischen Generator (10) den Druck überträgt, den es jeweils seitens der fluiddynamischen Kraft (V) empfängt, so dass der genannte Generator (10) beginnt, sich selbst zu laden; wenn dann die Schubverformung, welche auf den inneren Kanal des pseudoplastischen Ventils (6) einwirkt, die zulässige Last überschreitet, ändert der genannte innere Kanal des pseudoplastischen Ventils (6) seine innere Form (8') entsprechend und öffnet sich, so dass die Wirkung der fluiddynamischen Kraft (V) sich direkt und mit größerer Intensität in dem Kontaktbereich zwischen dem distalen Ende (206) des Ventils (6) und dem piezoelektrischen Generator (10) manifestiert; letzterer wird dabei weiter geladen, bis auch das distale Ende (206) des pseudoplastischen Ventils (6) unter der Einwirkung des Drucks seinen Zustand ändert und die fluiddynamische Kraft (V) frei durch die Ablasskanäle laufen lässt;
- Ablasskanäle (3), welche an der Außenseite des genannten Hohlraums (5) angeordnet sind und sich an der Hinterseite (201) des Körpers (1) der Zelle öffnen, die normalerweise durch das distale Ende (206) des pseudoplastischen Ventils (6) und durch den Kontakt des letzteren am vorderen Anker des piezoelektrischen Generators (10) geschlossen und so angeordnet sind, dass sie, wenn sie durch die Änderung des Zustands (8") des genannten distalen Endes des Ventils (6) geöffnet werden, einen plötzlichen Druckabfall stromaufwärts verursachen, und zwar sowohl am piezoelektrischen Generator (10), der die elektrischen Ladungen freisetzt, welche in der vorausgegangenen Kompressionsphase erzeugt wurden, wie in dem axialen Kanal des pseudoplastischen Ventils (6), das dadurch seine ursprüngliche Form zurückerhält und sich schließt, um einen neuen Umwandlungszyklus des beschriebenen Typs zu beginnen.

2. Eine Zelle gemäß Anspruch 1), wobei das pseudoplastische Ventil (6) ganz aus nicht-newtonschen pseudoplastischen Materialien bestehen beziehungsweise ein Gehäuse umfassen kann, das es umschließt und definiert, sowohl an der äußeren seitlichen Oberfläche wie an der inneren Oberfläche, das aus beliebigem zumindest flexiblem und zu diesem Zweck geeigneten Material, ebenfalls mit newtonschen Eigenschaften, besteht, wobei in dem genannten verformbaren Gehäuse das/die pseudoplastische(n) Material(ien) mit nicht-newtonschen Eigenschaften untergebracht ist/sind, welche den Körper des Ventils (6) bilden.

3. Eine Zelle gemäß Anspruch 1), bei der der vordere Anker des piezoelektrischen Generators (10) eine konkave Form aufweist, um eine optimale Verteilung auf den genannten Generator (10) der Ladung der inzidenten fluiddynamischen Kraft (V) zu gestatten, wobei der genannte Anker mit einem Einsatz (9) aus Polymer beschichtet ist, welcher nicht-newtonsche Eigenschaften aufweist und dehnbar ist, so dass er, wenn er durch die fluiddynamischen Kraft (V) angeschoben wird und letztere die vorbestimmten Werte überschreitet, jeweils vom festen Zustand in einen noch festeren Zustand übergeht und auf diese Weise zunächst als dynamischer Verstärker und dann als Stoßdämpfer wirkt.

4. Eine Zelle gemäß Anspruch 3), bei der der piezoelektrische Generator (10) an seinen eigenen Tragkörper (301) montiert ist, mit einer Zwischenschicht aus dehnbarem Material, welches dem des Einsatzes (9) ähnelt, der den vorderen Anker des genannten Generators bedeckt, so dass bei Vorhandensein des Drucks, der durch die fluiddynamische Kraft (V) ausgelöst wird, der Generator (10) im wesentlichen in einen "Schraubstock" geklemmt wird, welcher durch die fluiddynamische Kraft (V) und die nicht-newtonsche Verformung der genannten zwei Einsätze aus dehnbarem Material geschlossen wird, das heißt zwischen dem ersten Einsatz (9), der zwischen dem Generator (10) und dem pseudoplastischen Ventil (6) liegt und der vorzugsweise mit dem Körper (301) interagiert, und dem anderen Einsatz, welcher zwischen dem selben Generator (10) und dem entsprechenden Tragkörper (301) angeordnet ist, der ebenfalls jeweils mit dem genannten Körper (301) interagiert und der gegenüber dem genannten ersten Einsatz (9) liegt.

5. Eine Zelle gemäß Anspruch 2), **dadurch gekennzeichnet, dass**, um den Verschleiß im Kontaktbereich zwischen dem distalen Ende (206) des Ventils (6) und dem dehnbaren Einsatz (9) einzuschränken, ein dünner Film aus Polyacetat oder einem anderen, gleichwertigen Material jeweils zwischen diesen beiden Komponenten (6, 9)
angeordnet ist.

6. Eine Zelle gemäß Anspruch 1), bei der das genannte pseudoplastische Ventil (6) mit Hilfe von Klebstoffen und/oder anderen passenden Mitteln an der seitlichen und inneren Wand des Kanals (7) befestigt ist, welcher den proximalen Abschnitt des genannten Ventils (6) beherbergt, dessen innerer Kanal, in Form eines Verengung, oberhalb und unterhalb des Zwischenschließbereichs (8) jeweils entsprechende sich verjüngende Abschnitte aufweist, von denen einer (108) nach außen auseinanderstrebt, mit der darin wirkenden fluiddynamischen Kraft (V), und breiter ist als der andere sich verjüngende Abschnitt, (208), welcher in Richtung des piezoelektrischen Generators (10) auseinanderstrebt.

7. Eine Zelle gemäß Anspruch 1), **dadurch gekennzeichnet, dass** sie eine trichterförmige Struktur (4) aufweist, welche nach außen auseinanderstrebt, in dem Einlass (2) der fluiddynamischen Kraft (V) gewonnen oder darin eingesetzt wird und die von dem pseudoplastischen Ventil (6) abgefangen wird, um die Oberfläche des genannten Einlasses (2) entsprechend zu erhöhen, welcher der fluiddynamischen Kraft (V) gegenüberliegt, damit eine größere Menge der genannten Kraft (V) gesammelt und die Geschwindigkeit des Fluids in Richtung des genannten Einlasses (2) progressiv gesteigert wird.

8. Eine Zelle gemäß Anspruch 1), bei der die genannten Entladungskanäle (3) erste Abschnitte (103) mit progressiv erweitertem Schnitt aufweisen, dann darauf folgende haarnadelförmige Abschnitte (203) sowie entsprechende Endabschnitte (303), welche sich auf der Rückseite des Tragkörpers (1) der Zelle öffnen, wobei die genannten Entladekanäle (3) jeweils so angeordnet sind, dass sie auch den Tragkörper (301) des piezoelektrischen Generators (10) seitlich kurz berühren, so dass diese Komponente durch den fluiddynamischen Strom (V) gekühlt wird, welcher zyklisch durch die genannten Entladekanäle (3) fließt.

9. Eine Zelle gemäß den vorausgegangenen Ansprüchen, bei der die geometrische Form des axialen inneren Kanals (108, 8, 8', 208) des pseudoplastischen Ventils (6) und die Form der Entladekanäle (3) so beschaffen sind, dass sie innen im Kanal (108, 8', 208, 103), welcher durch die in der Entladung begriffene fluiddynamische Kraft (V) durchquert wird, die Herstellung von Druckänderungsbereichen erleichtern, die Venturi-Effekte auslösen, um das schnelle Schließen des genannten Ventils (6) nach der ersten Druckbeaufschlagungsphase zu vereinfachen; nach dem schnellen Druckabfall, der auf die Öffnung der Entladekanäle (3) folgt und dank des entsprechenden Venturi-Effekts, welcher in dem offenen axialen Kanal (8') des Ventils (6) entsteht, wird das distale Ende (206) des genannten Ventils durch die Luft, die von außen den verformten und offenen Teil (8")streift und durch den ersten Teil (103, 203) des Entladekanals (3) strömt, einem Druck ausgesetzt, welcher höher als der in dem offenen Bereich (8') des axialen Kanals des Ventils (6) ist, so dass der axiale Kanal des genannten Ventils (6) auch infolge dieser Umstände schnell in den ursprünglichen Zustand (8) zurückkehrt, in dem er sich schließt und die fluiddynamische Kraft (V) aussperrt.

10. Eine Zelle gemäß den vorausgegangenen Ansprüchen, welche dazu geeignet ist, an bewegliche Träger montiert oder befestigt zu werden, **dadurch gekennzeichnet, dass** sie zum Einbau in Serie mit anderen ähnlichen Zellen angeordnet wird, mit denen sie elektrisch und fluiddynamisch jeweils parallel- und reihengeschaltet werden kann und/oder parallel, um eine entsprechende Vorrichtung (12) zu bilden, deren Elektroden (11, 111) an eine Wechselstrom-/Gleichstrom-Umwandlungseinheit (13) und dann an eine darauf folgende Gleichstrom-/Wechselstrom-Umwandlungseinheit (14) angeschlossen werden können, die Wechselstrom mit der vorbestimmten Frequenz erzeugt, und zwar konstant und zweckentsprechend, oder der mit Hilfe eines entsprechenden Spannungsumformers (15) sowie anderer passender Mittel in eine Verteilungsleitung (L) eingespeist werden kann.

## Revendications

1. Cellule (C) pour convertir des forces de dynamique des fluides (V) en énergie électrique, **caractérisée en ce qu'**elle comprend :
- un corps de support (1) traversé par un canal (7) qui s'ouvre avec une entrée (2) sur la face (101) dudit corps (1) qui est exposé à l'action incidente de la force de dynamique des fluides (V) et qui avec l'entrée opposée (102) s'ouvre en une cavité (5) à l'intérieur dudit corps (1), pour que ladite force (V) traverse ledit canal (7) de son entrée avant (2) vers ladite cavité (5) ;
- au moins un générateur piézoélectrique (10) supporté par son propre corps (301), positionné dans ladite cavité (5) et orienté avec son armature avant perpendiculairement et coaxialement audit canal (7), pour que ladite force de dynamique des fluides (V) aie une action incidente au centre de ladite armature avant ;
- une soupape (6) positionnée dans ledit canal (7) pour cycliquement le fermer et l'ouvrir, ayant une forme de manchon, avec une longue portion annulaire de façon à être fixée extérieurement dans ledit canal (7) par son extrémité proximale (106) et atteindre par son extrémité distale (206) ladite cavité (5) et en contact avec ladite armature avant du générateur piézoélectrique (10) ; ladite soupape (6) forme avec ses parois internes un canal de sphincter qui avec sa portion proximale est exposé à l'action de la force de dynamique des fluides (V) et qui dans une zone intermédiaire (8) est initialement fermé ; ladite soupape (6) étant constitué de matériaux polymères non-newtoniens, de type pseudoplastique, et telle que au début de chaque cycle de transformation, le canal interne de ladite soupape (6) est normalement fermé et la même soupape (6) transmet au générateur piézoélectrique (10) la poussée qu'il reçoit de la force de dynamique des fluides (V) de telle sorte que ledit générateur (10) commence à se charger lui-même; quand la déformation de cisaillement agissant sur le canal interne de la soupape pseudoplastique (6) excède la charge nominale permise, ledit canal interne de la soupape pseudoplastique (6) modifie sa forme interne (8') et s'ouvre, de telle sorte que l'action de la force de dynamique des fluides (V) est manifestée directement et avec une intensité majeure dans la zone de contact entre l'extrémité distale (206) de la soupape (6) et le générateur piézoélectrique (10) ; ce dernier est ultérieurement chargé jusqu'à ce qu'également l'extrémité distale (206) de la soupape pseudoplastique (6), sous l'effet de la pression, modifie son statut et s'ouvre, laissant la force de dynamique des fluides (V) libre de circuler à travers les canaux d'évacuation;
- des canaux d'évacuation (3) situés à l'extérieur de ladite cavité (5), qui s'ouvrent sur la face arrière (201) du corps (1) de la cellule, normalement fermés par l'extrémité distale (206) de la soupape pseudoplastique (6) et par le contact de cette dernière sur l'armature avant du générateur piézoélectrique (10) et disposés de telle sorte que quand ils sont ouverts par le changement de statut (8") de ladite extrémité distale de la soupape (6), ils provoquent une soudaine chute de pression en amont, sur le générateur piézoélectrique (10) qui relâche les charges électriques produites dans la phase de compression précédente, et dans le canal axial de la soupape pseudoplastique (6) qui reprend sa forme initiale et se ferme pour commencer un nouveau cycle de conversion du type décrit.

2. Cellule selon la revendication 1), où la soupape pseudoplastique (6) peut être formée entièrement de matériaux pseudoplastiques non-newtoniens ou peut comprendre un revêtement qui l'enveloppe et la définit sur la surface latérale externe et sur la surface latérale interne, qui est constitué d'un matériau quelconque au moins flexible et approprié dans ce but, même avec des caractéristiques newtoniennes, et ledit revêtement déformable logeant le ou les matériaux pseudoplastiques, avec des caractéristiques non newtoniennes, qui forment le corps de la soupape (6).

3. Cellule selon la revendication 1), où l'armature avant du générateur piézoélectrique (10) a une forme concave pour permettre une distribution optimale sur ledit générateur (10) de la charge de la force de dynamique des fluides incidente (V), ladite armature étant revêtue avec un insert (9) constitué d'un polymère qui a des caractéristiques non-newtoniennes et est de type expansible, tel que quand il est poussé par la force de dynamique des fluides (V) et cette dernière excède des valeurs prédéfinies, il passe d'un statut solide à un statut encore plus solide, ainsi agissant premièrement comme un amplificateur dynamique et ensuite comme un amortisseur de chocs.

4. Cellule selon la revendication 3), où le générateur piézoélectrique (10) est monté sur son propre corps de support (301) avec une couche interposée de matériau expansible semblable à celui de l'insert (9) qui couvre l'armature avant dudit générateur (10), de telle sorte que en présence de la poussée déclenchée par la force de dynamique des fluides (V), le générateur (10) est substantiellement fixé dans un « étau » qui est fermé par la force de dynamique des fluides (V) et par la déformation non-newtonienne des dits deux inserts constitués de matériaux expansibles, c'est-à-dire entre le premier insert (9) situé entre le générateur (10) et la soupape pseudoplastique (6) et qui de préférence interagit avec le corps (301), et l'autre insert situé entre le même générateur (10) et le corps de support relatif (301) qui interagit aussi avec ledit corps (301) et qui est opposé audit premier insert (9).

5. Cellule selon la revendication 2), **caractérisée en ce que** pour limiter l'usure dans la zone de contact entre l'extrémité distale (206) de la soupape (6) et l'insert expansible (9), un film fin en polyacétate ou matériaux équivalents est disposé entre ces deux composants (6, 9).

6. Cellule selon la revendication 1), où ladite soupape pseudoplastique (6) est fixée par des adhésifs et/ou d'autres moyens appropriés à la paroi latérale et interne du canal (7) qui loge la portion proximale de ladite soupape (6), le canal interne de celle-ci, en forme d'un sphincter, a en amont et en aval des portions coniques de la zone de fermeture intermédiaire (8), une de celles-ci (108) diverge vers l'extérieur, avec la force de dynamique des fluides (V) agissant à l'intérieur de celle-ci, et est plus large par rapport à l'autre portion conique (208) qui diverge vers le générateur piézoélectrique (10).

7. Cellule selon la revendication 1), **caractérisée en ce qu'**elle comprend une structure en forme d'entonnoir (4) divergeant vers l'extérieur, obtenue dans ou insérée sur l'entrée (2) de la force de dynamique des fluides (V) et qui est interceptée par la soupape pseudoplastique (6), pour augmenter la surface de ladite entrée (2) faisant face à la force de dynamique des fluides (V), pour recueillir une plus grande quantité de ladite force (V) et pour progressivement augmenter la vitesse du fluide vers ladite entrée (2).

8. Cellule selon la revendication 1), où lesdits canaux d'évacuation (3) ont des premières portions (103) avec progressivement une section élargie, les portions successives en forme d'épingle à cheveux (203) et les portions terminales (303) s'ouvrant sur la face arrière du corps de support (1) de la cellule, lesdits canaux d'évacuation (3) étant disposés pour frôler également latéralement le corps de support (301) du générateur piézoélectrique (10), de telle sorte que ce composant est refroidi par le flux de dynamique des fluides (V) qui circule cycliquement dans lesdits canaux d'évacuation (3).

9. Cellule selon les revendications précédentes où la forme géométrique du canal axial interne (108, 8, 8', 208) de la soupape pseudoplastique (6) et la forme des canaux d'évacuation (3) sont tels pour faciliter, à l'intérieur du canal (108, 8', 208, 103) traversé par la force de dynamique des fluides étant évacuée (V), la création des zones de changement de pression qui déclenchent les effets Venturi pour faciliter la fermeture rapide de ladite soupape (6) après la première phase de pressurisation ; après la rapide chute de pression qui suit l'ouverture des canaux d'évacuation (3) et en raison de l'effet Venturi qui est créé dans le canal axial ouvert (8') de la soupape (6), l'extrémité distale (206) de ladite soupape est soumise, par l'air qui enveloppe extérieurement la partie déformée et ouverte (8") et qui circule à travers la première partie (103, 203) des canaux d'évacuation (3), à une pression majeure par rapport à celle dans la zone ouverte (8') du canal axial de la soupape (6), de telle sorte que, également en raison de ces conditions, le canal axial de ladite soupape (6) revient rapidement à la condition initiale (8) dans laquelle il ferme et bloque la force de dynamique des fluides (V).

10. Cellule selon les revendications précédentes, adaptée pour être montée sur des supports fixes ou mobiles, **caractérisée en ce qu'**elle est disposée pour l'aménagement en batterie avec d'autres cellules semblables avec lesquelles elle peut être connectée électriquement et de façon fluidodynamique en parallèle et en série et/ou parallèle pour former un dispositif (12), les électrodes (11, 111) de celui-ci peuvent être connectées à une unité de conversion CA/CC (13), et ensuite à une unité de conversion CA/CC suivante (14) qui générera un courant électrique alternatif à la fréquence prédéfinie, constante et appropriée pour l'usage, ou qui peut être introduite dans une ligne de distribution (L) à travers un transformateur de tension (15) et d'autres moyens appropriés.
